# EUROPÄISCHE PATENTANMELDUNG

(11) **EP 2 177 348 A1**
(43) Veröffentlichungstag der Anmeldung: **21.04.2010**
(21) Anmeldenummer: 09170247.2
(22) Anmeldetag: 15.09.2009
(51) Int. Cl.: B32B 1/08, B32B 25/08, B32B 27/08, F16L 11/04, F16L 11/08

(54) **Schlauch mit Anwendung im Pharma- und Lebensmittelbereich**

(30) Priorität: 15.10.2008 DE 102008037452
(71) Anmelder: ContiTech Schlauch GmbH, 30165 Hannover (DE)
(72) Erfinder: Onken, Kristian, 34117, Kassel (DE); Wydra, Wolfgang, 34516, Vöhl-Obernburg (DE)
(74) Vertreter: Finger, Karsten

(57) **Zusammenfassung**

Die Erfindung betrifft einen Schlauch (1) mit Anwendung im Pharma- und Lebensmittelbereich, der sich wiederum insbesondere durch folgenden Schichtenaufbau auszeichnet:
- eine Innenschicht (2) aus einem rußfreien Kunststoff, der insbesondere aus Polytetrafluorethylen (PTFE) besteht;
- eine erste elastomere Zwischenschicht (3), die mit der Innenschicht (2) einen dauerfesten Haftverbund bildet;
- eine erste und zweite Festigkeitsträgerschicht (4, 7), wobei die erste Festigkeitsträgerschicht (4) mit der ersten Zwischenschicht (3) in direkter Verbindung steht, wobei ferner beide Festigkeitsträgerschichten durch eine zweite elastomere Zwischenschicht (5), die mit einer Spiralwendel (6) verstärkt ist, von einander getrennt sind;
- sowie eine abriebfeste elastomere Außenschicht (8), die in direkter Verbindung mit der zweiten Festigkeitsträgerschicht (7) steht.

## Beschreibung

Die Erfindung betrifft einen Schlauch mit Anwendung im Pharma- und Lebensmittelbereich, bestehend wenigstens aus:
- einer Innenschicht aus Kunststoff, der beständig gegenüber dem zu fördernden Medium ist;
- einer oder mehreren elastomeren Zwischenschicht/en, wobei eine Zwischenschicht mit der Innenschicht in direkter Verbindung steht;
- einer oder mehreren eingebetteten Festigkeitsträgerschicht/en sowie
- einer abriebfesten elastomeren Außenschicht.

Hinsichtlich des Standes der Technik eines derartigen Schlauchaufbaus wird unabhängig vom Anwendungsbereich insbesondere auf folgende Patentliteratur verwiesen:
DE 35 24 286 C1
DE 42 32 946 C2
EP 0 222 323 B1
EP 0 582 301 B1
EP 0 582 302 B1
EP 0 826 915 B1
EP 1 383 650 B1
EP 1 450 092 B1

Schläuche mit einer Innenschicht aus Kunststoff anstelle elastomerer Werkstoffe auf Kautschukbasis finden eine zunehmende Bedeutung, insbesondere bei Chemikalienschläuchen, Treibstoffschläuchen, Kältemittelschläuchen, CO₂-Schläuchen sowie bei Schläuchen in der Lebensmittel- und Pharmaindustrie. Dabei werden je nach Anforderungen bislang spezielle Kunststoffe eingesetzt.

Die derzeitig am häufigsten verwendeten Chemikalienschläuche sind mit einer Fluorkunststoff-Innenschicht aus FEP oder PFA ausgekleidet, wobei hinsichtlich diesbezüglicher Nomenklaturdetails beispielsweise auf die Patentschrift EP 0 582 301 B1 verwiesen wird. Eine ähnliche Werkstoffkonstellation findet man auch bei Treibstoffschläuchen vor. Der Vorteil derartiger Kunststoffe ist ihre hohe Beständigkeit gegenüber einem aggressiven und somit werkstoffschädigenden Medium (z.B. Chemikalien, Öle, Benzin). Der Nachteilteil von PFA ist jedoch die geringe dynamische Tüchtigkeit beim Biegen des Schlauches, verbunden mit häufiger Rissbildung.

Bei Kältemittelschläuchen wie auch CO₂-Schläuchen werden insbesondere Polyamide (z.B. PA6, PA66) oder Polymere auf Basis eines Ethylenvinylalkohols (EVOH) eingesetzt. Im Hinblick auf eine Null-Permeation kommt dabei insbesondere eine Innenschicht in Form einer ersten Schicht aus PA und einer zweiten Schicht aus EVOH zum Einsatz. Diese Werkstoffe sind jedoch nicht für alle Schläuche geeignet.

Bei Schläuchen mit Anwendungsbereich in der Pharma- und Lebensmittelindustrie müssen grundsätzlich Werkstoffe verwendet werden, die in erster Linie Zulassungen erfüllen müssen, beispielsweise die USP Class VI Zulassung (amerikanische Pharmazulassung) und die FDA (amerikanische Lebensmittelzulassung). Diesen Werkstoffen (z.B. FEP, PFA, PE, PP, UPE; XLPE) sind jedoch hinsichtlich dynamischer Tüchtigkeit ebenfalls Grenzen gesetzt.

Im Rahmen einer Weiterentwicklung besteht die Aufgabe der Erfindung darin, einen Pharma- und Lebensmittelschlauch, wobei der Lebensmittelschlauch auch den Einsatz als Trinkwasserschlauch einbezieht, bereitzustellen, der alle Zulassungen hinsichtlich des Transportes von hochreinen Produkten erfüllt. Darüber hinaus soll er sich durch verbesserte physikalische und chemische Beständigkeit auszeichnen, insbesondere unter den Gesichtspunkten der dynamischen Tüchtigkeit, einer hohen Temperaturbeständigkeit und chemischen Beständigkeit, der Korrosionsfestigkeit und Mikrobenbeständigkeit sowie der Antihafteigenschaften. Darüber hinaus soll ein derartiger Schlauch einer leichten Reinigung zugänglich sein. Schließlich soll er die Grundlage eines vielfältigen Schlauchaufbaues bilden.

Gelöst wird diese Aufgabe dadurch, dass die Innenschicht aus einem rußfreien Kunststoff besteht und dabei mit der Zwischenschicht, mit der sie in direkter Verbindung steht, einen dauerfesten Haftverbund bildet.

Im Rahmen einer neueren Entwicklung gemäß DE 10 2008 014 988.8 werden Schläuche mit einer Kunststoff-Innenschicht, insbesondere aus PTFE, vorgestellt, deren Innenschicht leitfähig eingestellt ist, insbesondere unter Beimengung eines Rußes, insbesondere wiederum zur Herstellung eines "Full-Ohm"-Schlauches, wobei der Chemikalienschlauch einen schwerpunktmäßigen Einsatzbereich bildet. Im Gegensatz zu der Entwicklung gemäß DE 10 2008 014 988.8 ist bei dem erfindungsgemäßen Pharma- und Lebensmittelschlauch die Kunststoff-Innenschicht rußfrei. Optimalerweise werden zudem außer Ruß keine anderen leitfähigen Zusätze, beispielsweise Graphite und/oder Nanotubes, der Innenschicht beigemischt.

Der bevorzugte Werkstoff für die Innenschicht ist ein fluorhaltiger Kunststoff. Von besonderer Bedeutung ist dabei Polytetrafluorethylen (PTFE). Zu nennen sind aber auch Polyvinylfluorid (PVF) und Polyvinylidenfluorid (PVDF). Auch chemische Modifikationen der vorgenannten Werkstoffe können eingesetzt werden. So sind beispielsweise bei einem modifizierten PTFE in der Polymerkette zu einem geringen Anteil andere fluorierte Einheiten eingebaut.

Die Innenschicht liegt in Form einer Folie (z.B. PTFE-Folie) vor oder ist ein nahtlos extrudierter Innenschlauch. Die Stärke der Innenschicht beträgt dabei 0,01 mm bis 3 mm, insbesondere 0,05 mm bis 2 mm, insbesondere wiederum von 0,1 mm bis 1 mm.

Die Innenschicht ist zumindest innerhalb ihrer Kontaktseite zu der mit ihr in Verbindung stehenden Zwischenschicht oberflächenaktiviert, indem diese insbesondere angeätzt oder aufgeraut ist. Die Oberflächenveränderung bzw. Oberflächenbehandlung erfolgt mittels einer chemischen oder physikalischen Methode. Zu nennen wären hier insbesondere Flammenbehandlung, Corona-Entladung, Sputtering, Plasmabehandlung, Natrium-Ammoniak-Verfahren und Natrium-Naphthalin-Verfahren. Auch eine Vielzahl anderer chemischer oder physikalischer Ätzverfahren stehen für die Oberflächenaktivierung zur Verfügung. Im Vergleich zu unbehandeltem PTFE werden mit diesen Methoden die Hafteigenschaften dieses Kunststoffes deutlich erhöht. Auf diese Weise wird ein besonders dauerfester Haftverbund zwischen der Innenschicht aus dem rußfreien Kunststoff und der mit ihr in direktem Kontakt stehenden elastomeren Zwischenschicht erzielt.

In die Innenschicht können anorganische oder organische Pigmente eingearbeitet sein, die innerhalb des Kunststoffes gleichmäßig verteilt eingearbeitet sind. Hinsichtlich der Unterteilung der Pigmente gibt es:
Weißpigmente
Buntpigmente
Schwarzpigmente
Glanzpigmente
Lumineszenzpigmente
Mischphasenpigmente

Wichtig ist dabei, dass die Pigmente nicht toxisch sind. Hinsichtlich Details der oben genannten Pigmenttypen wird auf den allgemeinen Stand der Pigmenttechnik verwiesen.

Von besonderer Bedeutung sind Weißpigmente, beispielsweise Titandioxid, wobei sich im Hintergrund der rußfreien Innenschicht die Bildung einer rein weißen Innenschicht erzielen lässt, was bei Pharma- und Lebensmittelschläuchen eine bevorzugte Farbkonstellation ist.

Die Pigmente sind in einer Menge von 0,05 bis 15 Gew.-%, insbesondere von 0,05 bis 10 Gew.-%, insbesondere wiederum von 0,05 bis 5 Gew.-%, vorhanden, und zwar bezogen auf die Gesamtmasse der Innenschicht. Eine Versuchsreihe hat dabei ergeben, dass bei einer Menge von 0,05 bis 3 Gew.-%, insbesondere von 0,1 bis 2 Gew.-%, insbesondere wiederum von 0,2 bis 0,5 Gew.-%, die besten Ergebnisse erzielt werden, auch unter dem Aspekt der Verarbeitbarkeit und Permeationsdichtheit.

Alternativ hierzu kann die Innenschicht auch pigmentfrei sein. In Verbindung mit den fluorhaltigen Kunststoffen, insbesondere in Verbindung mit PTFE, lässt sich auch ohne Weißpigmente zumindest eine helle Innenschicht verwirklichen.

Der Schlauch weist zumindest eine elastomere Zwischenschicht, die mit der Innenschicht aus dem rußfreien Kunststoff in direktem Kontakt steht, und eine abriebfeste elastomere Außenschicht auf. Gegebenfalls können weitere elastomere Zwischenschichten vorhanden sein. In Verbindung mit der Figurenbeschreibung wird ein Schlauch mit zwei elastomeren Zwischenschichten vorgestellt.

Die Zwischenschicht/en und/oder die Außenschicht basiert/basieren insbesondere auf einer vulkanisierten Kautschukmischung, umfassend wenigstens eine Kautschukkomponente und Mischungsingredienzien. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FPM bzw. FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Siliconkautschuk (MVQ)
Fluorierter Methylsiliconkautschuk (MFQ)
Perfluorenierter Propylen-Kautschuk (FFPM)
Perflurocarbon-Kautschuk (FFKM)
Polyurethan (PU)

Von besonderer Bedeutung sind: EPDM, CM, FKM bzw. FPM, ECO, CR und NBR

Auch der Einsatz eines Verschnittes, insbesondere in Verbindung mit einem der vorgenannten Kautschuktypen, ist möglich. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Fasern, Farbpigmente). Diesbezüglich wird auf den allgemeinen Stand der Kautschukmischungstechnologie verwiesen.

In den Schlauch ist wenigstens eine Festigkeitsträgerschicht aus einem Textilgeflecht, Stahlgeflecht oder Glasgeflecht eingearbeitet, wobei das Textilgeflecht insbesondere auf natürlichen und/oder künstlichen Fasern basiert. In Verbindung mit der Figurenbeschreibung wird ein Schlauch mit zwei derartigen Festigkeitsträgerschichten sowie mit einer zusätzlichen Wendel vorgestellt.

Die Erfindung wird nun anhand eines Ausführungsbeispieles unter Bezugnahme auf eine schematische Zeichnung erläutert.

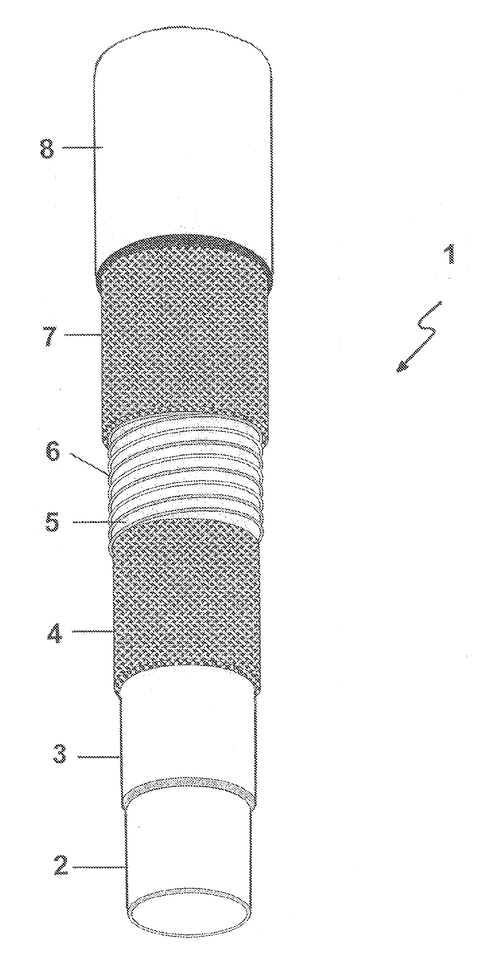

Die einzige Figur zeigt einen Schlauch 1 in Form eines Pharma- oder Lebensmittelschlauches, bestehend aus folgendem Schichtenaufbau:
- eine Innenschicht 2 aus einem rußfreien Kunststoff, insbesondere aus PTFE bei einer bevorzugten Stärke von 0,1 mm bis 1 mm;
- eine erste elastomere Zwischenschicht 3;
- eine erste Festigkeitsträgerschicht 4 aus einem Textilgeflecht, Stahlgeflecht oder Glasgeflecht;
- eine zweite elastomere Zwischenschicht 5;
- eine Wendel 6 aus Metall oder einem Kunststoff mit metallähnlichen Eigenschaften;
- eine zweite Festigkeitsträgerschicht 7 aus einem Textilgeflecht, Stahlgeflecht oder Glasgefecht;
- eine elastomere Außenschicht 8, die abriebfest und elektrisch isolierend oder elektrisch leitfähig ist.

Die Innenschicht 2 ist insbesondere glatt ausgebildet. Eine gewellte Innenschicht ist dagegen nachteilig, und zwar aus folgenden Gründen:
- Innerhalb der Schlauchleitung können turbulente Strömungen auftreten, und zwar in Folge der nicht glatten Oberfläche. Dieses kann zu Druckschwankungen bei der Mediumdurchleitung führen.
- Zudem können Medienresten in den Tälern der Wellenstruktur verbleiben, was zur Bildung von Bakteriennestern führen kann. Dies ist gerade bei Pharma- und Lebensmittelschläuchen zu vermeiden.

Die Außenschicht 8, die hier glatt gestaltet ist, kann zur Erhöhung der Flexibilität gewellt oder eingeschnürt geformt sein. Bei der Herstellung der elastomeren Zwischenschichten 3 und 5 wie auch der Außenschicht 8 kommen sowohl die Extrusion als auch die Wickeltechnik zum Einsatz.

### Bezugszeichenliste

### (Teil der Beschreibung)

- 1: Schlauch (Pharmaschlauch, Lebensmittelschlauch)
- 2: Innenschicht (Seele)
- 3: erste Zwischenschicht
- 4: erste Festigkeitsträgerschicht
- 5: zweite Zwischenschicht
- 6: Wendel (Spiralwendel)
- 7: zweite Festigkeitsträgerschicht
- 8: Außenschicht (Decke, Mantel)

## Patentansprüche

1. Schlauch (1) mit Anwendung im Pharma- und Lebensmittelbereich, bestehend wenigstens aus:
- einer Innenschicht (2) aus Kunststoff, der beständig gegenüber dem zu fördernden Medium ist;
- einer oder mehreren elastomeren Zwischenschicht/en (3, 5), wobei eine Zwischenschicht (3) mit der Innenschicht (2) in direkter Verbindung steht;
- einer oder mehreren eingebetteten Festigkeitsträgerschicht/en (4, 7) sowie
- einer abriebfesten elastomeren Außenschicht (8);
**dadurch gekennzeichnet, dass** die Innenschicht (2) aus einem rußfreien Kunststoff besteht und dabei mit der Zwischenschicht (3), mit der sie in direkter Verbindung steht, einen dauerfesten Haftverbund bildet.

2. Schlauch nach Anspruch 1, **gekennzeichnet durch** folgenden Schichtenaufbau:
- eine Innenschicht (2) aus einem rußfreien Kunststoff;
- eine erste elastomere Zwischenschicht (3), die mit der Innenschicht (2) einen dauerfesten Haftverbund bildet;
- eine erste und zweite Festigkeitsträgerschicht (4, 7), wobei die erste Festigkeitsträgerschicht (4) mit der ersten Zwischenschicht (3) in direkter Verbindung steht, wobei ferner beide Festigkeitsträgerschichten **durch** eine zweite elastomere Zwischenschicht (5) von einander getrennt sind;
- sowie eine abriebfeste elastomere Außenschicht (8), die in direkter Verbindung mit der zweiten Festigkeitsträgerschicht (7) steht.

3. Schlauch nach Anspruch 1 oder 2, **dadurch gekennzeichnet, dass** die Innenschicht (2) aus einem fluorhaltigen Kunststoff besteht.

4. Schlauch nach Anspruch 3, **dadurch gekennzeichnet, dass** die Innenschicht (2) aus Polytetrafluorethylen (PTFE), Polyvinylfluorid (PVF), Polyvinylidenfluorid (PVDF) oder deren chemischen Modifikationen besteht.

5. Schlauch nach einem der Ansprüche 1 bis 4, **dadurch gekennzeichnet, dass** die Innenschicht (2) in Form einer Folie vorliegt oder ein nahtlos extrudierter Innenschlauch ist.

6. Schlauch nach einem der Ansprüche 1 bis 5, **dadurch gekennzeichnet, dass** die Innenschicht (2) zumindest innerhalb ihrer Kontaktseite zu der mit ihr in Verbindung stehenden Zwischenschicht (3) oberflächenaktiviert ist.

7. Schlauch nach einem der Ansprüche 1 bis 6, **dadurch gekennzeichnet, dass** in die Innenschicht (2) anorganische oder organische Pigmente eingearbeitet sind.

8. Schlauch nach Anspruch 7, **dadurch gekennzeichnet, dass** die Pigmente Weißpigmente sind.

9. Schlauch nach Anspruch7 oder 8, **dadurch gekennzeichnet, dass** die Pigmente in einer Menge von 0,05 bis 15 Gew.-% vorhanden sind, und zwar bezogen auf die Gesamtmasse der Innenschicht (2).

10. Schlauch nach einem der Ansprüche 1 bis 6, **dadurch gekennzeichnet, dass** die Innenschicht (2) einen Kunststoff umfasst, der pigmentfrei ist.

11. Schlauch nach einem der Ansprüche 1 bis 10, **dadurch gekennzeichnet, dass** die Stärke der Innenschicht (2) 0,01 mm bis 3 mm beträgt.

12. Schlauch nach einem der Ansprüche 1 bis 11, **dadurch gekennzeichnet, dass** die Innenschicht (2) glatt ist.

13. Schlauch nach einem der Ansprüche 1 bis 12, **dadurch gekennzeichnet, dass** die Zwischenschicht/en (3, 5) und/oder die Außenschicht (8) auf einer vulkanisierten Kautschukmischung basiert/basieren, umfassend wenigstens eine Kautschukkomponente und Mischungsingredienzien.

14. Schlauch nach Anspruch 13, **dadurch gekennzeichnet, dass** die Kautschukkomponente ein Ethylen-Propylen-Mischpolymerisat (EPM), ein Ethylen-Propylen-Dien-Mischpolymerisat (EPDM), Nitrilkautschuk (NBR), (teil)hydrierter Nitrilkautschuk (HNBR) Fluor-Kautschuk (FPM bzw. FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Siliconkautschuk (MVQ), Fluorierter Methylsiliconkautschuk (MFQ), Perfluorinierter Propylen-Kautschuk (FFPM), Perfluorocarbon-Kautschuk (FFKM) oder Polyurethan (PU) ist, gegebenenfalls unter Einsatz eines Verschnittes, insbesondere in Verbindung mit einem der vorgenannten Kautschuktypen.

15. Schlauch nach einem der Ansprüche 1 bis 14, **dadurch gekennzeichnet, dass** die Festigkeitsträgerschicht/en (4, 7) aus einem Textilgefecht, Stahlgeflecht oder Glasgeflecht besteht/bestehen.

16. Schlauch nach einem der Ansprüche 2 bis 15, **dadurch gekennzeichnet, dass** im Bereich der zweiten Zwischenschicht (5) eine Wendel (6) aus Metall oder einem Kunststoff mit metallähnlichen Eigenschaften angeordnet ist.

17. Schlauch nach einem der Ansprüche 2 bis 15, **dadurch gekennzeichnet, dass** der Bereich der zweiten Zwischenschicht (5) frei von einer Wendel (6) ist.

18. Schlauch nach einem der Ansprüche 1 bis 17, **dadurch gekennzeichnet, dass** die Außenschicht (8) glatt, gewellt oder eingeschnürt geformt ist.
